Europäisches Patentamt

European Patent Office

Office européen des brevets

(11) Veröffentlichungsnummer : **0 426 196 B1**

(12) **EUROPÄISCHE PATENTSCHRIFT**

(45) Veröffentlichungstag der Patentschrift :
**23.02.94 Patentblatt 94/08**

(21) Anmeldenummer : **90121055.9**

(22) Anmeldetag : **02.11.90**

(51) Int. Cl.⁵ : **C09C 1/02,** C09C 3/10,
C09C 1/40, C08K 9/04,
// (C08K9/04, 3:22)

(54) **Oberflächenmodifizierte Füllstoffe.**

(30) Priorität : **01.11.89 CH 3951/89**

(43) Veröffentlichungstag der Anmeldung :
**08.05.91 Patentblatt 91/19**

(45) Bekanntmachung des Hinweises auf die
Patenterteilung :
**23.02.94 Patentblatt 94/08**

(84) Benannte Vertragsstaaten :
**AT BE CH DE DK ES FR GB GR IT LI LU NL SE**

(56) Entgegenhaltungen :
CA-A- 1 221 186
FR-A- 2 371 493
US-A- 3 376 188

(73) Patentinhaber : **LONZA AG**
**Gampel/Wallis Geschäftsleitung Basel**
**CH-4002 Basel (CH)**

(72) Erfinder : **Metzemacher, Hans-Dieter**
**Gloedenstrasse 20**
**Köln (DE)**
Erfinder : **Seeling, Rainer, Dr.**
**Gutenbergstrasse 33**
**Bergheim (DE)**

(74) Vertreter : **Weinhold, Peter, Dr. et al**
**Patentanwälte Dr. V. Schmied-Kowarzik**
**Dipl.-Ing. G. Dannenberg Dr. P. Weinhold Dr. D.**
**Gudel Dipl.-Ing. S. Schubert Dr. P. Barz**
**Siegfriedstrasse 8**
**D-80803 München (DE)**

## Beschreibung

Die Erfindung betrifft oberflächenmodifizierte Magnesiumhydroxid- oder Aluminiumhydroxidteilchen, deren Verwendung in thermoplastischen Polyolefinen, sowie schwerbrennbare thermoplastische Polyolefine, enthaltend das erfindungsgemäss oberflächenmodifizierte Magnesiumhydroxid oder Aluminiumhydroxid.

Bei der Einarbeitung von Magnesiumhydroxid oder Aluminiumhydroxid in Kunststoffe stellt sich einerseits das Problem der Einarbeitbarkeit und der Verträglichkeit des Magnesiumhydroxids oder Aluminiumhydroxids mit dem Kunststoff; andererseits muss der mit Magnesiumhydroxid oder Aluminiumhydroxid versehene Kunststoff die geforderten Eigenschaften, insbesondere bezüglich des Brandverhaltens, erfüllen.

Es hat daher nicht an Bemühungen gefehlt, flammhemmende Füllstoffe so zu modifizieren, dass sie ohne Schwierigkeiten in die Kunststoffe eingearbeitet werden können, ohne dass das Eigenschaftsprofil des Kunststoffs, besonders in Bezug auf das Brandverhalten, Einbussen erleidet.

So ist z.B. aus der DE-PS 26 59 933 bekannt, Magnesiumhydroxid mit anionischen oberflächenaktiven Stoffen, wie z.B. mit Alkalisalzen von höheren Fettsäuren, zu überziehen. Wie die Vergleichsversuche deutlich machen, können solcherart modifizierte Magnesiumhydroxide den gestellten Anforderungen nicht genügen.

Aus der EP-Anm. 292 233 ist im weiteren bekannt, Füllstoffe, wie z.B. Magnesiumhydroxid oder Aluminiumhydroxid, mit einem, ungesättigte Säuregruppen enthaltenden Polymer zu coaten und in ein Olefin/Acrylpolymer einzuarbeiten.

Beispielsweise wird Magnesiumhydroxid oder Aluminiumhydroxid in einem Matrixpolymer mit einem maleinisierten Polybutadien gecoatet. Die ebenfalls als liquid-elastomere bezeichneten Polybutadiencoatings haben aber aufgrund der zahlreichen Doppelbindungen den grossen Nachteil, dass sie sehr anfällig gegen UV- und Ozoneinflüsse sind, d.h. das Eigenschaftsprofil des entsprechend behandelten Füllstoffs bzw. des Füllstoff enthaltenden Compounds verschlechtert sich unter den genannten Einflüssen stark. Ausserdem sind bei der Compoundierung eines derart modifizierten Füllstoffs in einen Kunststoff durch die niedrige Temperaturtoleranz des Coatings bei der Wahl des Compoundieraggregats Grenzen gesetzt.

Es stellte sich daher die Aufgabe, Magnesiumhydroxid- oder Aluminiumhydroxidteilchen so zu modifizieren, dass sie die Nachteile aus dem Stand der Technik nicht aufweisen. Diese Aufgabe konnte gelöst werden mit erfindungsgemäss oberflächenmodifizierten Magnesiumhydroxid- oder Aluminiumhydroxidteilchen nach Patentanspruch 1.

Unter Magnesiumhydroxid werden Magnesiumhydroxide natürlicher oder synthetischer Provenienz verstanden.

Natürliche Magnesiumhydroxide können solche sein, die aus dem Meerwasser bzw. aus $Mg(OH)_2$-haltigen Mineralien, wie z.B. Brucit, gewonnen werden.

Synthetische Magnesiumhydroxide können solche sein, wie sie z.B. unter dem Warenzeichen Magnifin[R] von der Martinswerk GmbH in Bergheim vertrieben werden.

Ebenfalls unter dem Begriff Magnesiumhydroxid werden Magnesiumhydroxicarbonate, wie sie z.B. unter dem Warenzeichen Ultracarb[R] von der Fa. Microfine Minerals vertrieben werden, verstanden.

Zweckmässig werden Magnesiumhydroxidteilchen eingesetzt, die eine spez. Oberfläche nach BET um kleiner als 20 m²/g und eine mittlere Teilchengrösse $d_{50}$ kleiner als 2 µm aufweisen.

Unter Aluminiumhydroxid werden Aluminiumhydroxide natürlicher oder synthetischer Provenienz verstanden.

Natürliche Aluminiumhydroxide können solche sein, die aus $Al(OH)_3$-haltigen Mineralien, wie z.B. Hydrargillit oder Gibbsit, gewonnen werden.

Synthetische Aluminiumhydroxide können solche sein, wie sie z.B. unter dem Warenzeichen Martifin[R] oder Martinal[R] von der Martinswerk GmbH in Bergheim vertrieben werden.

Erfindungsgemäss sind die Magnesiumhydroxid- oder Aluminiumhydroxidteilchen mit einem flüssigen Ethylen-Propylen-Copolymer (EPM) und/oder einem flüssigen Ethylen-Propylen-Terpolymer (EPDM) oberflächenbehandelt. Diese Polymere sind auch unter dem Oberbegriff "liquid elastomers" bekannt.

Als Termonomer im EPDM treten zweckmässig Diene, wie z.B. Dicyclopentadien oder Norbornadien, auf.

Diese EPM- oder EPDM-Polymere weisen zweckmässig ein Ethylen/ Propylenverhältnis zwischen 40 zu 60 und 60 zu 40 auf und haben ein mittleres Molekulargewicht von kleiner 20'000, vorzugsweise zwischen 1'000 und 15'000 (gewichtsmäßiger Durchschnitt).

Die Jodzahl als Indiz für die Anzahl der Doppelbindungen liegt bei den verwendeten EPM- oder EPDM-Polymeren zweckmässig zwischen 1 und 25.

Die flüssigen EPM- oder EPDM-Polymere gelangen in einer Menge von 0,1 bis 20 Teilen, vorzugsweise 1 bis 5 Teilen, pro 100 Teile Magnesiumhydroxid oder Aluminiumhydroxid zum Einsatz.

Zusätzlich wird das Magnesiumhydroxid- oder Aluminiumhydroxidteilchen mit mindestens einer weiteren Komponente oberflächenbehandelt, die aus der Gruppe, bestehend aus trans-Polyoctenameren (TOR), ther-

2

moplastischen Elastomeren, Haftvermittlern und Netzwerkbildnern, ausgewählt ist.

Die Magnesiumhydroxid- oder Aluminiumhydroxidteilchen können im weiteren mit einem trans-Polyoctenamer (TOR) oberflächenbehandelt sein.

Als TOR-Polymere werden solche eingesetzt, deren trans-Gehalt sich zwischen 40 bis 90%, vorzugsweise zwischen 60 bis 80%, bewegt und deren Schmelz- bzw. Erweichungspunkt zweckmässig zwischen 45 und 90°C liegt.

Das genannte trans-Polyoctenamer wird in einer Menge von 0,1 bis 50 Teilen, vorzugsweise von 0,5 bis 5 Teilen, pro 100 Teile Magnesiumhydroxid oder Aluminiumhydroxid eingesetzt.

Das Magnesiumhydroxid oder Aluminiumhydroxid kann ausserdem mit einem thermoplastischen Elastomer (TPE), wie sie z.B. in "Thermoplastische Elastomere im Aufwärtstrend", 2.Fachtagung 10-11.10.1989, Würzburg, Prof.Dr.Müller, Süddeutsches Kunststoffzentrum, beschrieben sind, oberflächenbehandelt werden. Folgende Polymere sind in Mengen von 0,1 bis 50 Teilen, vorzugsweise von 0,2 bis 30 Teilen, pro 100 Teile Magnesiumhydroxid oder Aluminiumhydroxid einsetzbar:

- EVA und seine Copolymere
  Block-Copolymere aus harten und weichen Segmenten, wie
- Styrolelastomere, wie z.B. SBS, SIS, SEBS
- Thermoplastische PUR-Elastomere (TPU)
- Ether-Ester-Block-Copolymere (EEBC)
- Polyether-Polyamid-Block-Copolymere (PEBA)
- Thermoplastische Silikonkautschuke (TPQ)
  oder Legierungen (Polymer-Blends), wie
- Thermoplastische Polyolefine, meist mit Polyproylen (PP) als Polyolefin und einem Ethylen-Propylen-Copolymer (EPM), oder -Terpolymer (EPDM) als "weiches" Segment.

Alternativ zu Polypropylen als "Hart"-Segment sind die amorphen bis teilkristallinen Thermoplaste, wie

- Polyamid (PA)
- Polystyrol (PS)
- Styrolacrylnitril-Copolymere (SAN)

verwendbar.

Als "weiche" Phase finden sich, neben anderen, Ethylenvinylacetat (EVA) und seine Copolymere.

Bevorzugt werden aus der Gruppe der thermoplastischen Polymere Silikonkautschuke, insbesondere solche, wie sie z.B. in der DE-OS 27 48 924 beschrieben sind, oder EVA-Polymere mit einem VA-Gehalt zwischen 15 und 70% verwendet.

In einer vorzugsweisen Ausführungsform können zusätzlich Haftvermittler, sog. "coupling agents", eingesetzt werden. Diese Verbindungsklasse weist funktionelle Gruppen auf, welche sicherstellen, dass die aus dem (Basis-)Polymer bestehende Matrix und die Aggregate der Magnesiumhydroxid- oder Aluminiumhydroxidteilchen möglichst gut an der Interphase miteinander in Kontakt und möglichst kovalent aneinander gebunden sind.

Geeignete Verbindungen für eine Bindungsbildung zu hydroxylischen Oberflächen sind Organosilane, Organotitanate, Organozirko-(alumi)nate oder Organoaluminate.

Als Organosilane werden zweckmässig solche verwendet, wie sie z.B. in der DE-PS 27 43 682 beschrieben sind oder aus dem Firmenprospekt der Hüls AG Marl, "Anwendung von organofunktionellen Silanen, Dynasilan® Okt.1989" hervorgehen.

Bevorzugt werden Vinylsilane, wie z.B. Vinyltriethoxysilan oder Vinyltrimethoxysilan, Aminosilane, wie z.B. Aminopropyltriethoxysilan, oder Methacrylsilane, wie z.B. (Methacryloyloxypropyl)-trimethoxysilane eingesetzt.

Als Organotitanate, Organo-zirko-(alumi-)nate oder Organoaluminate werden zweckmässig solche verwendet, wie sie in der Firmenschrift "Ken-react reference manual", Bulletin KR-1084-2 der Kenrich Petrochemicals Inc. beschrieben sind.

Geeignete Organotitanate bzw. Organozirkonate sind beispielsweise:

Titan(IV)2-propanolato, tris-isooctadecanoato-O

Titan(IV)bis-2-methyl-2-propenoato-O, isooctadecanoato-O, 2-propanolato

Titan(IV)2-propanolato, tris(dodecyl)benzolsulfonato-O

Titan(IV)2-propanolato, tris(dioctyl)phosphato-O

Titan(IV) (4-amino) benzolsulfonato-O, bis (dodecyl)benzolsulfonato-O, 2-propanolato

Titan(IV) tris(2-methyl)-2-propenoato-O, methoxydiglycolylato

Titan(IV)2-propanolato, tris(dioctyl)pyrophosphato-O

Titan(IV) tris (2-propenoato-O), methoxydiglycolyloto

Titan(IV)2-propanolato, tris(3,6-diaza)hexanolato

Titan(IV) bis[4-(2-phenyl)2-propyl-2]phenolato, oxoethylendiolato
Titan(IV)bis(dioctyl)pyrophosphato-O, oxoethylendiolato, (Addukt), (dioctyl) hydrogenphosphit-O
Titan(IV)oxoethylendiolato, tris(2-methyl)-2-propenoato-O
Titan(IV)bis(butyl, methyl)pyrophosphato-O, oxoethylen-diolato, (Addukt), bis(dioctyl)hydrogenphosphit
Titan(IV)bis(dioctyl)phophato-O, ethylendiolato
Titan (IV)bis(dioctyl)pyrophosphato-O, ethylendiolato (Addukt), bis(dioctyl)hydrogenphosphit
Titan(IV)bis(butyl, methyl)pyrophosphato-O, ethylendiolato, (Addukt), bis(dioctyl) hydrogenphosphit
Titan(IV)bis(dioctyl)pyrophosphato-O, oxoethylendiolato, Addukt mit 2 Mol 2-N,N-Dimethylamino-2-methylpropanol
Titan(IV)bis(butyl, methyl)pyrophosphato-O, Addukt mit 2 Mol 2-N,N-Dimethylamino-2-methylpropanol
Titan(IV)ethylendiolato, bis(dioctyl)pyrophosphato-O, bis(Triethyl)amin Salz
Titan(IV)ethylendiolato, bis(dioctyl)pyrophosphato-O, bis-(dialkyl)aminoalkyl-2-methylpropenoate
Titan(IV)bis(dioctyl)pyrophosphato-O,ethylendiolato, Addukt mit 2 Mol Acrylato-O amin
Titan(IV)bis(dioctyl)pyrophosphato-O, ethylendiolato, Addukt mit 2 Mol 2-Methylpropenoamido-N amin
Titan(IV)bis(butyl, methyl)pyrophosphato, ethylendiolato, bis(Dialkyl)aminoalkylacrylat Salz
Titan(IV)(bis-2-propenolato-methyl)-1-butanolato, bis(dioctyl)pyrophosphato-O, Addukt mit 3 Mol N,N-Dimethylamino-alkylpropenoamid
Zirkonium(IV)2,2-dimethyl-1,3-propandiolato, bis(dioctyl)pyrophosphato-O, Addukt mit 2 Mol N,N-Dimethylamino-alkylpropenoamid
Zirkonium(IV)(2-ethyl, 2-propenolatomethyl)1,3-propandiolato, cyclo-bis-2-dimethylaminopyrophosphato-O,O, Addukt mit 2 Mol Methansulfonsäure
Titan(IV)tetrakis-2-propanolato, Addukt mit 2 Mol (Dioctyl)hydrogenphosphat
Titan(IV)tetrakis octanolato, Addukt mit 2 Mol (Di-tridecyl)-hydrogenphosphit
Titan(IV)tetrakis(bis-2-propenolato methyl)butanolato, Addukt mit 2 Mol (Di-tridecyl)hydrogenphosphit
Zirkonium(IV)tetrakis-2,2(bis-2-propenolatomethyl)butanolato, Addukt mit 2 Mol Ditridecylhydrogenphosphit
Titan(IV)2,2(bis-2-propenolatomethyl)butanolato, tris-neodecanolato-O
Titan(IV)2,2(bis-2-propenolatomethyl)butanolato, tris(dodecyl)benzolsulfonato-O
Titan(IV)2,2(bis-2-propenolatomethyl)butanolato, tris(dioctyl)phosphato-O
Titan(IV)2,2(bis-2-propenolatomethyl)butanolato, tris(dioctyl) pyrophosphato-O
Titan(IV)2,2(bis-2-propenolatomethyl)butanolato, tris(2-ethylendiamino ethylato
Titan(IV)2,2(bis-2-propenolatomethyl)butanolato, tris(3-amino) phenylato
Titan(IV)2,2(bis-2-propenolatomethyl)butanolato, tris(6-hydroxy) hexanoato-O
Titan(IV)bis-octanolato, cyclo(dioctyl)pyrophosphato-O,O
Titan(IV)bis-cyclo(dioctyl)pyrophosphat-O,O
Zirkonium(IV)2-ethyl, 2-propenolatomethyl-1,3-propandiolato, cyclo-di-2,2-(bis-2-propenolatomethyl)butanolato-pyrophosphato-O,O
Zirkonium(IV)bis-2-ethylhexanolato, cyclo(di-2-ethylhexl) pyrophophato
Zirkonium(IV)2,2-(bis-2-propenolatomethyl)butanolato, tris-neodecanolato-O
Zirkonium(IV)2,2-(bis-2-propenolatomethyl)butanolato, tris(dodecyl) benzolsulfonato-O
Zirkonium(IV)2,2-(bis-2-propenolatomethyl)butanolato, tris(dioctyl) phosphato-O
Zirkonium(IV)2,2-(bis-2-propenolatomethyl)butanolato, tris-2-methyl-2-propenoato-0
Zirkonium(IV)2,2-(bis-2-propenolatomethyl)butanolato, tris(dioctyl) pyrophosphato-O
Zirkonium(IV)2,2-(bis-2-propenolato)butanolato, tris-2-propenoato-O
Zirkonium(IV)2,2-(bis-2-propenolatomethyl)butanolato, tris(2-ethylendiamino)ethylato
Zirkonium(IV)bis-(2,2-Dimethyl)-1,3-propandiolato, bis-(9,10-11,12-diepoxy)octadecanoato-O
Zirkonium(IV)2-ethyl,2-propenolatomethyl-1,3-propandiolato-bis-mercaptophenylato
Zirkonium(IV)1,1-(bis-2-propenolatomethyl)butanolato, tris(2-amino)phenylato

Die genannten Haftvermittler werden in Mengen zwischen 0,01 bis 10 Teilen, vorzugsweise zwischen 0,05 bis 5 Teilen, pro 100 Teile Magnesiumhydroxid oder Aluminiumhydroxid eingesetzt.

In einer weiteren vorzugsweisen Ausführungsform können zusätzlich Netzwerkbildner "interpenetrating network" bildner (IPN-Bildner) zugesetzt werden, die eine gegenseitige Durchdringung von zwei thermodynamisch nicht verträglichen (nicht mischbaren) Polymersystemen bewirken und damit eine gezielte Steuerung des Eigenschaftsprofils des mit den Magnesiumhydroxid- oder Aluminiumhydroxidteilchen versehenen Compounds zulassen. Zur Formierung der interpenetrating networks haben sich solche Polysiloxansysteme, bzw. Polysiloxan-Copolymersysteme als vorteilhaft herausgestellt, insbesondere solche wie sie z.B. in der DE-OS 27 48 924 beschrieben sind. Beispielsweise werden Polysiloxan/Polystyrol-Copolymere, Polysiloxan/Polycarbonat-Copolymere, Polysiloxan/Polyester-Copolymere, Polysiloxan/Polyamid-Copolymere, Polysiloxan/Polyamidimid-Copolymere, Polysiloxan/Polyimid-Copolymere und/oder Polysiloxan/Polysulfon-Copolymere verwendet.

Als Polysiloxan-Komponente können beispielsweise lineare Poly-diorganosiloxane verwendet werden, vorzugsweise mit einer Viskosität bis 200 000 Pa·s, besonders bevorzugt mit einer Viskosität von 1000 bis 200 000 Pa·s, wobei die organischen Gruppen ausgewählt sind aus gegebenenfalls substituierten einwertigen Kohlenwasserstoffresten, vorzugsweise aus Alkyl-, Cycloalkyl-, Aryl-, Alkenyl- und Halogenalkylresten mit 1 bis 10 Kohlenstoffatomen, insbesondere aus Methyl, Ethyl, Propyl, Vinyl, Allyl, Methacryl, Cyclohexyl, Phenyl, Methylphenyl, Ethylphenyl etc. Beispiele für Halogenalkylreste sind chlorierte und fluorierte Alkylreste, wie z.B. 3,3,3-Trifluorpropyl. Die Polysiloxan-Komponente kann auch reaktive Hydroxysilylgruppen enthalten.

Gegebenenfalls enthält das beschriebene System zusätzlich Crosslinker vom Silantyp, die funktionelle Gruppen enthalten, die mit den Silanolfunktionen der Polysiloxankomponente in der Lage sind zu reagieren.

Diese Vernetzungsreaktionen werden zweckmässig durch geeignete Katalysatoren, z.B. Carboxylate der Elemente Sn, Zn, Fe, Ti, Zr, oder auch durch Edelmetallkatalysatoren katalysiert.

Die IPN-Bildner werden in Mengen von 0,1 bis 20 Teilen pro 100 Teile Füllstoff eingesetzt.

Gegebenenfalls können weitere Verarbeitungshilfsmittel, wie Fettsäuren und deren geeignete Derivate oder auch Stabilisatoren zugesetzt werden.

Zur Oberflächenmodifizierung werden die Magnesiumhydroxid- oder Aluminiumhydroxidteilchen zweckmässig in einem geeigneten Mischer, vorzugsweise in einem Mischer, der hohe Scherkräfte ermöglicht, mit den erwähnten Coagenzien versehen. Dabei kann die Zugabe in gewählter Reihenfolge in bestimmten Zeitintervallen bei unterschiedlichen Temperaturen und bei, den Coagenzien angepassten Prozessparametern erfolgen. Es ist ebenso möglich, eine Vormischung der Coagenzien zusammen mit den Magnesiumhydroxid- oder Aluminiumhydroxidteilchen dem Mischer zuzuführen.

Vorteilhaft kann auch zunächst ein Additivkonzentrat, ein sog. Masterbatch, hergestellt werden, indem nur eine Teilmenge des Füllstoffes mit den betreffenden Coagenzien gemäss dem genannten Verfahren in einem Mischer mit hohen Scherkräften vermischt wird. Dieses sog. Masterbatch kann dann auf einfache Weise mit einem technisch weniger aufwendigen Mischaggregat, z.B. beim Kunden, mit der entsprechenden Menge zusätzlichen Füllstoffes verdünnt und zum einsatzbereiten oberflächenmodifizierten Füllstoff verarbeitet werden.

Das auf diese Weise modifizierte Magnesiumhydroxid oder Aluminiumhydroxid kann darauf mit dem gewünschten thermoplastischen Polyolefin nach gängigen Methoden zu einem Compound verarbeitet werden. Als Compoundieraggregate bieten sich dafür handelsübliche Mischaggregate an, wie z.B. Ein- oder Doppel-Schneckenkneter oder Ko-Kneter.

Die erfindungsgemäss oberflächenbehandelten Magnesiumhydroxid- oder Aluminiumhydroxidteilchen sind für die Flammfestausrüstung von thermoplastischen Polyolefinen, wie z.B. Polyethylen und seine Copolymere, Polypropylen oder auch EVA und seine Copolymere, geeignet.

Ueblicherweise wird das oberflächenbehandelte Aluminiumhydroxid in thermoplastischen Polyolefinen eingesetzt, die bis ca. 180°C verarbeitbar sind.

Geeignete Vertreter solcher thermoplastischer Olefine sind z.B. EVA und seine Copolymere oder Polyethylen und seine Copolymere.

Das oberflächenbehandelte Magnesiumhydroxid dagegen wird in der Regel im Hochtemperaturbereich, d.h. in thermoplastischen Polymeren, die ab 180 bis über 300°C verarbeitbar sind, vorzugsweise in Polypropylen eingesetzt.

Gegebenenfalls können auch Mischungen von oberflächenbehandeltem Magnesiumhydroxid und oberflächenbehandeltem Aluminiumhydroxid für die Flammfestausrüstung von thermoplastischen Polyolefinen eingesetzt werden.

Gegenüber den unbehandelten Magnesiumhydroxid- oder Aluminiumhydroxidteilchen weisen sie ein bis zu 50% höheres Schüttgewicht auf. Ausserdem sind die behandelten Magnesiumhydroxid- oder Aluminiumhydroxidteilchen frei fliessend und damit gut dosierbar und staubfrei.

Der Gehalt an oberflächenbehandeltem Material in der betreffenden Polymermatrix bewegt sich dabei in der Regel zwischen 50 und 70%, vorzugsweise tendiert er zu niedrigeren Prozentagen innerhalb der genannten Bandbreite, um die Beeinträchtigung des mechanischen Eigenschaftsbildes des Compounds zu minimieren.

Die Magnesiumhydroxid- oder Aluminiumhydroxidteilchen enthaltenden Compounds können zusätzlich faserförmige Verstärkerstoffe enthalten.

Zu den Faserstoffen zählen beispielsweise Glasfasern, Steinfasern, Metallfasern, polykristalline keramische Fasern, einschliesslich der Einkristalle, den sogenannten "whiskers", ebenso alle aus synthetischen Polymeren herrührenden Fasern, wie z.B. Aramid-, Kohlenstoff-, Polyamid, Polyacryl-, Polyester- und Polyethylen-Fasern.

Falls gewünscht, können die Compounds mit geeigneten Pigmenten und/oder Farbstoffen versehen sein.

Eine überragende Schlagzähigkeit bei ausgewogenem Eigenschaftsprofil der Polymermatrix konnte erreicht werden, wenn die Magnesiumhydroxid- oder Aluminiumhydroxidteilchen mit einem flüssigen EPM- oder EPDM-Polymer und zusätzlich mit einem vorgängig genannten trans-Polyoctenamer (TOR) oberflächenbehandelt wurden.

Eine sehr gute Zugfestigkeit bei ausgewogen gutem Eigenschaftsprofil der Polymermatrix wird erreicht, wenn die Magnesiumhydroxid- oder Aluminiumhydroxidteilchen mit einem flüssigen EPM- oder EPDM-Polymer sowie zusätzlich mit einem Vinylsilan als Haftvermittler oberflächenbehandelt sind.

Ueberraschend ausgewogen gute Eigenschaftsprofile der Polymermatrix werden auch durch folgende Kombination erreicht:

- Magnesiumhydroxid- oder Aluminiumhydroxidteilchen/EPM- oder EPDM-Polymer/TOR/Vinylsilan als Haftvermittler,
- Magnesiumhydroxid- oder Aluminiumhydroxidteilchen/TOR/IPN-Bildner,
- Magnesiumhydroxid- oder Aluminiumhydroxidteilchen/TOR/thermoplast.Elastomer.

Vergleichsbeispiel 1

10 kg Magnesiumhydroxid Kisuma 5A der Kyowa Chemical Ind., das gemäss DE-PS 26 59 933 oberflächenmodifiziert ist, wurde mit einem Polypropylen-Homopolymer, mit einem mittleren Molekulargewicht von $4,4 \cdot 10^5$, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

Vergleichsbeispiel 2

Im Intensivmischer (Fluid-/Kühlmischer-Kombination) wurden 10 kg Magnesiumhydroxid Magnifin H 10 der Martinswerk GmbH mit einer mittleren Korngrösse von 1 µm und einer mittleren spez. Oberfläche nach BET von 10 m²/g bei einer Temperatur von 50°C fluidisiert. Innerhalb von 60 s wurden 0,1 kg eines flüssigen Ethylen-Propylen-Terpolymers (EPDM) mit Dicyclopentadien als Termonomer und mit einem mittleren Molekulargewicht von 7000 (Trilene 65, Uniroyal) gleichmässig zum agitierten Füllstoff gegeben. Nach 5 min wurde die Endtemperatur von 80 bis 100°C erreicht und das modifizierte Magnesiumhydroxid in den Kühlmischer ausgetragen.

Das erhaltene Produkt wurde mit einem Polypropylen-Homopolymer, mit einem mittleren Molekulargewicht von $4,4 \cdot 10^5$, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

Beispiel 1

15 kg, mit 0,15 kg Vinylsilan (A 172, Union Carbide) behandeltes Magnesiumhydroxid Magnifin H 10 der Martinswerk GmbH, mit einer mittleren Korngrösse von 1 µm und einer mittleren spez. Oberfläche nach BET von 10 m²/g wurden im Intensivmischer (Fluid-/Kühlmischer-Kombination) fluidisiert, bis eine Temperatur von etwa 50°C erreicht war. Innerhalb von 90 s wurde ein Gemisch aus 0,69 kg eines flüssigen Ethylen-Propylen-Copolymer (EPM) mit einem mittleren Molekulargewicht von 7200 (Trilene CP 80, Uniroyal) und 0,3 kg eines Styrol-Butadienelastomers (Kraton G, Shell) als thermoplastisches Elastomer gleichmässig zum agitierten Füllstoff hinzugefügt. Als die Chargentemperatur 100°C erreicht hatte, wurde in den Kühlmischer ausgetragen. Der solchermassen modifizierte Füllstoff war charakterisiert durch ein 50% höheres Schüttgewicht, Staubfreiheit und gute Dosierbarkeit.

Das erhaltene Produkt wurde mit einem Polypropylen-Homopolymer, mit einem mittleren Molekulargewicht von $4,4 \cdot 10^5$, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

Beispiel 2

Im Intensivmischer (Fluid-/Kühlmischer-Kombination) wurden 15 kg Magnesiumhydroxid Magnifin H 10 der Martinswerk GmbH mit einer mittleren Korngrösse von 1 µm und einer mittleren spez. Oberfläche nach BET von 10 m²/g vorgelegt und 1,4 kg eine gemäss Vergleichsbeispiel 2 hergestellten oberflächenbehandelten Magnesiumhydroxids in Form eines Masterbatches mit 55% Mg(OH)$_2$-Gehalt in den stehenden Mischer gegeben. Nachdem die Charge 5 min fluidisiert wurde, betrug die Mischertemperatur etwa 80 bis 100°C.

Das Produkt wurde in den Kühlmischer ausgetragen und dann unverzüglich mit 0,15 kg Vinyltriethoxysilan als Haftvermittler versetzt. Während der Abkühlphase auf 35°C wurde das Vinyltriethoxysilan homogen eingearbeitet.

Der so modifizierte Füllstoff zeichnete sich aus durch ein 30% höheres Schüttgewicht, hohe Fluidität und daher sehr gute Dosierbarkeit und Staubfreiheit.

Das erhaltene Produkt wurde mit einem Polypropylen-Homopolymer, mit einem mittleren Molekulargewicht von $4,4 \cdot 10^5$, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

### Beispiel 3

Im Intensivmischer (Fluid/Kühlmischer-Kombination) wurden 10 kg Magnesiumhydroxid Magnifin H 10 der Martinswerk GmbH mit einer mittleren Korngrösse von ca. 1 µm und einer mittleren spez. Oberfläche nach BET von ca. 10 m²/g mit 200 g (2,0 Gew%) Vinylsilan (A 172, Union Carbide) und 300 g (3,0 Gew.%) flüssigem EPDM mit Dicyclopentadien (DCPD) als Termonomer und mit einem mittleren Molekulargewicht von 7000 (Trilene 65, Uniroyal) insgesamt 10 min bei einer Endtemperatur von 50 bis 70°C vermischt.

Das erhaltene Produkt wurde mit einem Polypropylen-Homopolymer, mit einem mittleren Molekulargewicht von $4,4 \cdot 10^5$, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

### Beispiel 4

Im Intensivmischer (Fluid/Kühlmischer-Kombination) wurden 10 kg Magnesiumhydroxid Magnifin H 10 der Martinswerk GmbH mit einer mittleren Korngrösse von ca. 1 µm und einer mittleren spez. Oberfläche nach BET von ca. 10 m²/g mit 460 g (4,6 Gew.%) flüssigem EPDM mit Dicyclopentadien als Termonomer und mit einem mittleren Molekulargewicht von 7000 (Trilene 65, Uniroyal) und mit 310 g (3,1 Gew.%) trans-Polyoctenamer (TOR) mit 80% trans. Gehalt (Vestenamer 8012, Hüls) und einem Erweichungsbereich zwischen 55 und 70°C insgesamt 10 min bei einer Endtemperatur von 50 bis 70°C vermischt.

Das erhaltene Produkt wurde mit einem Polypropylen-Homopolymer mit einem mittleren Molekulargewicht von $4,4 \cdot 10^5$, (Vestolen P 8400, Hüls) auf einem Einschneckengerät so zu einem Compound verarbeitet, dass das Compound jeweils 35% Polypropylen und 65% modifiziertes Magnesiumhydroxid enthielt.

### Beispiel 5

Im Intensivmischer (Fluid/Kühlmischer-Kombination) wurden 10 kg Magnesiumhydroxid Magnifin H 10 der Martinswerk GmbH mit einer mittleren Korngrösse von ca. 1 µm und einer mittleren spez. Oberfläche nach BET von 10 m²/g mit 300 g (3,0 Gew.%) flüssigem EPDM mit Dicyclopentadien als Termonomer und mit einem mittleren Molekulargewicht von 7000 (Trilene 65, Uniroyal) mit 200 g (2,0 Gew.%) Ethylenvinylacetat (Escorene Ultra US 04028), mit 100 g (1,0 Gew.%) Zirkoniumlaurat mit 200 g (2,0 Gew.%) vernetztem Polyethylen (Vistaflex, EXXON) als thermoplast. Elastomer 10 min bei einer Endtemperatur von 50 bis 70°C vermischt.

Das erhaltene Produkt wurde mit einem Polypropylen-Homopolymer mit einem mittleren Molekulargewicht von $4,4 \cdot 10^5$, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

### Beispiel 6

Im Intensivmischer (Fluid/Kühlmischer-Kombination) wurden 10 kg Magnesiumhydroxid Magnifin H 10 der Marktinswerk GmbH mit einer mittleren Korngrösse von ca. 1 µm und einer mittleren spez. Oberfläche nach BET von 10 m²/g mit 300 g (3,0 Gew.%) flüssigem EPDM mit Dicyclopentadien als Termonomer und mit einem mittleren Molekulargewicht von 7000 (Trilene 65, Uniroyal) mit 200 g (2,0 Gew.%) eines Ethylenvinylacetats (Escorene Ultra UL 04028, EXXON) als thermoplastisches Elastomer und mit 100 g (1,0 Gew.%) Laurinsäure insgesamt 10 min bei einer Endtemperatur von 50 bis 70°C vermischt.

Das erhaltene Produkt wurde mit einem Polypropylen-Homopolymer mit einem mittleren Molekulargewicht von $4,4 \cdot 10^5$, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

### Beispiel 7

Im Intensivmischer (Fluid/Kühlmischer-Kombination) wurden 10 kg Magnesiumhydroxid Magnifin H 10 der Martinswerk GmbH mit einer mittleren Korngrösse von ca. 1 µm und einer mittleren spez. Oberfläche nach BET von ca. 10 m²/g mit 50 g (0,5 Gew%) eines quaternären Zirkonats (NZ 38 J, Kenrich) und 300 g (3,0 Gew.%) flüssigem EPDM mit Dicyclopentadien (DCPD) als Termonomer und mit einem mittleren Molekulargewicht von 7000 (Trilene 65, Uniroyal) und 200 g (2 Gew.%) PEBA (Pebax Atochem) insgesamt 10 min bei einer Endtemperatur von 50 bis 70°C vermischt.

Das erhaltene Produkt wurde mit einem Polypropylen-Homopolymer, mit einem mittleren Molekulargewicht von 4,4·10⁵, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

Beispiel 8

Im Intensivmischer (Fluid/Kühlmischer-Kombination) wurden 10 kg Magnesiumhydroxid Magnifin H 10 der Martinswerk GmbH mit einer mittleren Korngrösse von ca. 1 μm und einer mittleren spez. Oberfläche nach BET von ca. 10 m²/g mit 100 g (1,0 Gew%) eines Organopolysiloxans (SFR 100, General Electric Silicones) und 300 g (3,0 Gew.%) flüssigem EPDM mit Dicyclopentadien (DCPD) als Termonomer und mit einem mittleren Molekulargewicht von 7000 (Trilene 65, Uniroyal) und 200 g (2 Gew.%) Aminosilan (A 1100, Union Carbide) insgesamt 10 min bei einer Endtemperatur von 50 bis 70°C vermischt. Das erhaltene Produkt wurde mit einem Polypropylen-Homopolymer, mit einem mittleren Molekulargewicht von 4,4·10⁵, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

<u>T a b e l l e   1</u>

| | Mg(OH)$_2$ unbehand. | Vergl.beisp. 1 | 2 | Beispiele 1 | 2 | 3 | 4 | 5 | 6 | 7 | 8 |
|---|---|---|---|---|---|---|---|---|---|---|---|
| Zugfestigkeit nach DIN 53455 (N/mm2) | 20,0 | 16,1 | 21,5 | 29,0 | 26,0 | 27,0 | 20,0 | 19,6 | 18,5 | 20,0 | 26,0 |
| Reissdehnung nach DIN 53455 (m/m) | 0,03 | 0,15 | 0,03 | 0,24 | 0,16 | 0,05 | 0,06 | 0,06 | 0,08 | 0,16 | 0,09 |
| Schlagzähigkeit nach DIN 53453 (KJ/m2) | 7,5 | 55,0 | 6,5 | o.Br. | o.Br. | 42,0 | o.Br. | 52,0 | o.Br. | o.Br. | o.Br. |
| UL 94 (3 mm Probendicke) | VO | V2 | VO | VO | VO | VO | VO | VO | VO | VO | VO |

o.Br. = ohne Bruch
UL   = Underwriter Laboratories

EP 0 426 196 B1

Beispiel 9 (Ultracarb®)

Im Intensivmischer (Fluid/Kühlmischer-Kombination) wurden 10 kg Magnesiumhydroxidcarbonat Ultracarb[R] U5 der Microfine Minerals mit einer mittleren spez. Oberfläche nach BET von ca. 15 m²/g mit 200 g (2,0 Gew%) Vinylsilan (A 172, Union Carbide) und 300 g (3,0 Gew.%) flüssigem EPM mit einem mittleren Molekulargewicht von 7200 (Trilene CP 80, Uniroyal) insgesamt 10 min bei einer Endtemperatur von 50 bis 70°C vermischt.

Das erhaltene Produkt wurde mit einem Polypropylen-Homopolymer, mit einem mittleren Molekulargewicht von $4,4 \cdot 10^5$, (Vestolen PP 8400, Hüls) auf einem Einschneckengerät so zu einem Compound verarbeitet, dass das Compound jeweils 35% Polypropylen und 65% modifiziertes Magnesiumhydroxid enthielt.

T a b e l l e   2

|  | Ultracarb® unbehandelt | Beispiel 9 |
|---|---|---|
| Zugfestigkeit nach DIN 53455 (N/mm2) | 22 | 36 |
| Reissdehnung nach DIN 53455 (m/m) | 0,03 | 0,1 |
| Schlagzähigkeit nach DIN 53453 (KJ/m2) | 7,5 | o.Br. |
| UL 94 (3 mm Probendicke) (1,6 mm " ) | V1 n.e. | VO V1 |

n.e. = nicht erfüllt  /  o.Br. = ohne Bruch

Vergleichsbeispiel

Im Intensivmischer (Fluid-/Kühlmischer-Kombination) wurden 10 kg Aluminiumhydroxid Martinal OL 107 der Martinswerk GmbH mit einer mittleren Korngrösse von 0,9-1,3 μm und einer mittleren spez. Oberfläche nach BET von 6-8 m²/g bei einer Temperatur von 50°C fluidisiert. Innerhalb von 60 s wurden 0,1 kg eines flüssigen Ethylen-Propylen-Terpolymers (EPDM) mit Dicyclopentadien als Termonomer und mit einem mittleren Molekulargewicht von 7000 (Trilene 65, Uniroyal) gleichmässig zum agitierten Füllstoff gegeben. Nach 5 min wurde die Endtemperatur von 80 bis 100°C erreicht und das modifizierte Aluminiumhydroxid in den Kühlmischer ausgetragen.

Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

Beispiel 10

15 kg, mit 0,15 kg Vinylsilan (A 172, Union Carbide) behandeltes Aluminiumhydroxid Martinal OL 107 der Martinswerk GmbH, mit einer mittleren Korngrösse von 0,9-1,3 μm und einer mittleren spez. Oberfläche nach BET von 6-8 m²/g wurden im Intensivmischer (Fluid-/Kühlmischer-Kombination) fluidisiert, bis eine Temperatur von etwa 50°C erreicht war. Innerhalb von 90 s wurde ein Gemisch aus 0,69 kg eines flüssigen Ethylen-Propylen-Copolymer (EPM) mit einem mittleren Molekulargewicht von 7200 (Trilene CP 80, Uniroyal) und 0,3 kg eines Styrol-Butadienelastomers (Kraton G, Shell) als thermoplastisches Elastomer gleichmässig zum agitierten Füllstoff hinzugefügt. Als die Chargentemperatur 100°C erreicht hatte, wurde in den Kühlmischer ausgetragen.

Der solchermassen modifizierte Füllstoff war charakterisiert durch ein 50% höheres Schüttgewicht, Staubfreiheit und gute Dosierbarkeit.

Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

Beispiel 11

Im Intensivmischer (Fluid-/Kühlmischer-Kombination) wurden 15 kg Aluminiumhydroxid Martinal OL 107 der Martinswerk GmbH mit einer mittleren Korngrösse von 0,9-1,3 μm und einer mittleren spez. Oberfläche nach BET von 6-8 m²/g vorgelegt und 1,4 kg eine gemäss Vergleichsbeispiel 2 hergestellten oberflächenbehandelten Aluminiumhydroxids in Form eines Masterbatches mit 55% Al(OH)$_3$-Gehalt in den stehenden Mischer gegeben. Nachdem die Charge 5 min fluidisiert wurde, betrug die Mischertemperatur etwa 80 bis 100°C. Das Produkt wurde in den Kühlmischer ausgetragen und dann unverzüglich mit 0,15 kg Vinyltriethoxysilan als Haftvermittler versetzt. Während der Abkühlphase auf 35°C wurde das Vinyltriethoxysilan homogen eingearbeitet.

Der so modifizierte Füllstoff zeichnete sich aus durch ein 30% höheres Schüttgewicht, hohe Fluidität und daher sehr gute Dosierbarkeit und Staubfreiheit.

Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

Beispiel 12

Im Intensivmischer (Fluid/Kühlmischer-Kombination) wurden 10 kg Aluminiumhydroxid Martinal OL 107 der Martinswerk GmbH mit einer mittleren Korngrösse von ca. 0,9-1,3 μm und einer mittleren spez. Oberfläche nach BET von ca. 6-8 m²/g mit 200 g (2,0 Gew%) Vinylsilan (A 172, Union Carbide) und 300 g (3,0 Gew.%) flüssigem EPDM mit Dicyclopentadien (DCPD) als Termonomer und mit einem mittleren Molekulargewicht von 7000 (Trilene 65, Uniroyal) insgesamt 10 min bei einer Endtemperatur von 50 bis 70°C vermischt.

Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

Beispiel 13

Im Intensivmischer (Fluid/Kühlmischer-Kombination) wurden 10 kg Aluminiumhydroxid Martinal OL 107 der Martinswerk GmbH mit einer mittleren Korngrösse von ca. 0,9-1,3 μm und einer mittleren spez. Oberfläche nach BET von ca. 6-8 m²/g mit 460 g (4,6 Gew.%) flüssigem EPDM mit Dicyclopentadien als Termonomer und mit einem mittleren Molekulargewicht von 7000 (Trilene 65, Uniroyal) und mit 310 g (3,1 Gew.%) trans-Polyoctenamer (TOR) mit 80% trans. Gehalt (Vestenamer 8012, Hüls) und einem Erweichungsbereich zwischen 55 und 70°C insgesamt 10 min bei einer Endtemperatur von 50 bis 70°C vermischt.

Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

Beispiel 14

Im Intensivmischer (Fluid/Kühlmischer-Kombination) wurden 10 kg Aluminiumhydroxid Martinal 05 107 der Martinswerk GmbH mit einer mittleren Korngrösse von ca. 0,9-1,3 μm und einer mittleren spez. Oberfläche nach BET von 6-8 m²/g mit 300 g (3,0 Gew.%) flüssigem EPDM mit Dicyclopentadien als Termonomer und mit einem mittleren Molekulargewicht von 7000 (Trilene 65, Uniroyal) mit 200 g (2,0 Gew.%) Ethylenvinylacetat (Escorenen Ultra UL 04028, EXXON), mit 100 g (1,0 Gew.%) Zirkoniumlaurat mit 200 g (2,0 Gew.%) vernetztem Polyethylen (Vistaflex EXXON) als thermoplast. Elastomer 10 min bei einer Endtemperatur von 50 bis 70°C vermischt.

Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

Beispiel 15

Im Intensivmischer (Fluid/Kühlmischer-Kombination) wurden 10 kg Aluminiumhydroxid Martinal OL 107 der Marktinswerk GmbH mit einer mittleren Korngrösse von ca. 0,9-1,3 µm und einer mittleren spez. Oberfläche nach BET von ca. 6-8 m²/g mit 300 g (3,0 Gew.%) flüssigem EPDM mit Dicyclopentadien als Termonomer und mit einem mittleren Molekulargewicht von 7000 (Trilene 65, Uniroyal) mit 200 g (2,0 Gew.%) eines Ethylenvinylacetats (Escorene Ultra UL 04028, EXXON) als thermoplastisches Elastomer und mit 100 g (1,0 Gew.%) Laurinsäure insgesamt 10 min bei einer Endtemperatur von 50 bis 70°C vermischt.

Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

Beispiel 16

Im Intensivmischer (Fluid/Kühlmischer-Kombination) wurden 10 kg Aluminiumhydroxid Martinal OL 107 der Martinswerk GmbH mit einer mittleren Korngrösse von ca. 0,9-1,3 µm und einer mittleren spez. Oberfläche nach BET von ca. 6-8 m²/g mit 50 g (0,5 Gew%) eines quat. Zirkonat (NZ 38 J Kenrich) und 300 g (3,0 Gew.%) flüssigem EPDM mit Dicyclopentadien (DCPD) als Termonomer und mit einem mittleren Molekulargewicht von 7000 (Trilene 65, Uniroyal) und 200 g (2 Gew.%) PEBA (Pebax Atochem) insgesamt 10 min bei einer Endtemperatur von 50 bis 70°C vermischt.

Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

Beispiel 17

Im Intensivmischer (Fluid/Kühlmischer-Kombination) wurden 10 kg Aluminiumhydroxid Martinal OL 107 der Martinswerk GmbH mit einer mittleren Korngrösse von ca. 0,9-1,3 µm und einer mittleren spez. Oberfläche nach BET von ca. 6-8 m²/g mit 100 g (1,0 Gew%) eines Organopolysiloxans (SFR 100, General Electric Silicones) und 300 g (3,0 Gew.%) flüssigem EPDM mit Dicyclopentadien (DCPD) als Termonomer und mit einem mittleren Molekulargewicht von 7000 (Trilene 65, Uniroyal) und 200 g (2 Gew.%) Aminosilan (A 1100, Union Carbide) insgesamt 10 min bei einer Endtemperatur von 50 bis 70°C vermischt. Das erhaltene Produkt wurde mit einem EVA Polymer (Escorene Ultra UL 02020, EXXON) auf einem Einschneckengerät so zu einem Compound verarbeitet, dass das Compound jeweils 35% EVA Polymer und 65% modifiziertes Aluminiumhydroxid enthielt.

## Tabelle 3

| | OL-107 | Vergleichs-beispiel | Beispiele 10 | 11 | 12 | 13 | 14 | 15 | 16 | 17 |
|---|---|---|---|---|---|---|---|---|---|---|
| Zugfestigkeit nach DIN 53455 (N/mm²) | 10 | 10,5 | 16 | 18 | 16 | 19 | 14 | 18 | 18,5 | 13 |
| Reissdehnung nach DIN 53455 (m/m) | 0,5 | 0,36 | 0,15 | 0,26 | .0,1 | 0,13 | 0,45 | 0,15 | 0,25 | 0,5 |
| UL 94 (3 mm Probendicke) | V-2 | V-0 | V-0 | V-0 | V-0 | V-0 | V-0 | V-0 | V-0 | V-0 |
| (2 mm Probendicke) | – | V-2 | V-0 | V-1 | V-0 | V-2 | V-0 | V-0 | V-2 | V-2 |
| LOI | 45 | | | | | | | | | |

UL = Underwriters Laboratories

EVA Escorene Ultra UL 02020 (Extrusions-Type)

EP 0 426 196 B1

## Tabelle 4

| | OL-107 | Vergleichs-beispiel | Beispiele 18 | 19 | 20 | 21 | 22 |
|---|---|---|---|---|---|---|---|
| Zugfestigkeit nach DIN 53455 (N/mm²) | 12 | 3,8 | 16,4 | 15 | 12,1 | 10,9 | 12,0 |
| Reissdehnung nach DIN 53455 (m/m) | 0,08 | 0,04 | 0,16 | 0,1 | 0,21 | 0,15 | 0,11 |
| UL 94 (3 mm Probendicke) | n.e. | V-1 | V-0 | V-0 | V-0 | V-0 | V-0 |
| (2 mm Probendicke) | – | n.e. | V-2 | V-0 | V-1 | V-1 | V-0 |
| LOI | 35,7 | 35,9 | | | | | |

UL = Underwriters Laboratories

PE 1800 S (BASF)
Lupolen

n.e. = nicht erfüllt

| Beispiel 18 analog Beispiel 11 |
| " 19 " " 12 |
| " 20 " " 17 |
| " 21 " " 14 |
| " 22 " " 13 |

EP 0 426 196 B1

EP 0 426 196 B1

**Patentansprüche**

**Patentansprüche für folgende Vertragsstaaten : AT, BE, CH, DE, DK, FR, GB, GR, IT, LI, LU, NL, SE**

1. Oberflächenmodifizierte Magnesiumhydroxid- oder Aluminiumhydroxidteilchen, dadurch gekennzeichnet, daß sie zum Zweck der Oberflächenbehandlung mit einem flüssigen Ethylen-Propylen-Copolymer (EPM) und/ oder einem flüssigen Ethylen-Propylen-Terpolymer (EPDM) sowie zusätzlich mit einem trans-Polyoctenamer (TOR) und/oder einem thermoplastischen Elastomer und/oder einem Haftvermittler und/oder einem Netzwerkbildner behandelt sind, wobei
   - als flüssige EPM- oder EPDM-Polymere solche, die ein mittleres Molekulargewicht von kleiner als 20'000 aufweisen, in einer Menge von 0,1 bis 20 Teilen pro 100 Teile Magnesiumhydroxid oder Aluminiumhydroxid,
   - als trans-Polyoctenamere solche, die einen trans-Gehalt zwischen 40 und 90% aufweisen, in einer Menge von 0,1 bis 50 Teilen pro 100 Teile Magnesiumhydroxid oder Aluminiumhydroxid,
   - als thermoplastische Elastomere Ethylenvinylacetat (EVA) und seine Copolymere, Block-Copolymere aus weichen und harten Segmenten oder Legierungen (Polymer-Blends) in einer Menge von 0,1 bis 50 Teilen pro 100 Teile Magnesiumhydroxid oder Aluminiumhydroxid,
   - als Haftvermittler ein Silan, ein Titanat, ein Aluminat, ein Zirkonat oder ein Zirkoaluminat oder gegebenenfalls Kombinationen der genannten Verbindungen in einer Menge zwischen 0,01 und 10 Teilen pro 100 Teile Magnesiumhydroxid oder Aluminiumhydroxid und
   - als Netzwerkbildner Organopolysiloxane oder Organopolysiloxan-Copolymersysteme in einer Menge von 0,1 bis 20 Teilen pro 100 Teile Magnesiumhydroxid oder Aluminiumhydroxid
   verwendet werden.

2. Magnesiumhydroxid- oder Aluminiumhydroxidteilchen nach Patentanspruch 1, dadurch gekennzeichnet, dass als thermoplastische Elastomere Ethylen-Vinylacetat-Copolymere, Styrolelastomere, thermoplastische PUR-Elastomere, Ether-Ester-Block-Copolymere, Polyether-Polyamid-Block-Copolymere, thermoplastische Silikonkautschuke oder thermoplastische Polyolefine verwendet werden.

3. Verwendung eines oberflächenmodifizierten Magnesiumhydroxids und/oder Aluminiumhydroxids gemäss den Patentansprüchen 1 oder 2 als flammhemmender Füllstoff in thermoplastischen Polyolefinen.

4. Verwendung eines oberflächenmodifizierten Magnesiumhydroxids gemäß den Patentansprüchen 1 oder 2 als flammhemmender Füllstoff in einer Menge von 50 - 70 Gew.% in Polypropylen.

5. Schwerbrennbares thermoplastisches Polyolefin, enthaltend ein oberflächenmodifiziertes Magnesiumhydroxid und/oder Aluminiumhydroxid gemäss den Patentansprüchen 1 oder 2.

6. Verfahren zur Herstellung von oberflächenmodifizierten Magnesiumhydroxid- oder Aluminiumhydroxidteilchen nach den Patentansprüchen 1 oder 2, dadurch gekennzeichnet, daß Magnesiumhydroxid- oder Aluminiumhydroxidteilchen mit einem flüssigen Ethylen-Propylen-Copolymer (EPM) und/oder einem flüssigen Ethylen-Propylen-Terpolymer (EPDM) sowie zusätzlich mit einem trans-Polyoctenamer (TOR) und/oder einem thermoplastischen Elastomer und/oder einem Haftvermittler und/oder einem Netzwerkbildner als Oberflächenbehandlungsmittel, gleichzeitig oder getrennt, behandelt werden, wobei
   - als flüssige EPM- oder EPDM-Polymere solche, die ein mittleres Molekulargewicht von kleiner als 20'000 aufweisen, in einer Menge von 0,1 bis 20 Teilen pro 100 Teile Magnesiumhydroxid oder Aluminiumhydroxid,
   - als trans-Polyoctenamere solche, die einen trans-Gehalt zwischen 40 und 90% aufweisen, in einer Menge von 0,1 bis 50 Teilen pro 100 Teile Magnesiumhydroxid oder Aluminiumhydroxid,
   - als thermoplastische Elastomere Ethylenvinylacetat (EVA) und seine Copolymere, Block-Copolymere aus weichen und harten Segmenten oder Legierungen (Polymer-Blends) in einer Menge von 0,1 bis 50 Teilen pro 100 Teile Magnesiumhydroxid oder Aluminiumhydroxid,
   - als Haftvermittler ein Silan, ein Titanat, ein Aluminat, ein Zirkonat oder ein Zirkoaluminat oder gegebenenfalls Kombinationen der genannten Verbindungen in einer Menge zwischen 0,01 und 10 Teilen pro 100 Teile Magnesiumhydroxid oder Aluminiumhydroxid und

- als Netzwerkbildner Organopolysiloxane oder Organopolysiloxan-Copolymersysteme in einer Menge von 0,1 bis 20 Teilen pro 100 Teile Magnesiumhydroxid oder Aluminiumhydroxid

verwendet werden.

**7.** Verfahren nach Patentanspruch 6, dadurch gekennzeichnet, daß die Oberflächenbehandlung durch intensives Mischen in einem geeigneten Mischer, vorzugsweise in einem Mischer, der hohe Scherkräfte ermöglicht, durchgeführt wird.

**8.** Verfahren nach einem der Patentansprüche 6 oder 7, dadurch gekennzeichnet, daß eine Vormischung der Oberflächenbehandlungsmittel zusammen mit dem Magnesiumhydroxid oder Aluminiumhydroxid dem Mischer zugeführt wird.

**9.** Verfahren nach einem der Patentansprüche 6 oder 7, dadurch gekennzeichnet, daß zunächst ein Additivkonzentrat hergestellt wird, indem nur eine Teilmenge des Magnesiumhydroxids oder Aluminiumhydroxids mit dem (den) Oberflächenbehandlungsmittel(n) in einem Mischer mit hohen Scherkräften vermischt wird, wonach dieses Additivkonzentrat in einem Mischaggregat mit gegebenenfalls geringeren Scherkräften mit der entsprechenden Menge zusätzlichen Magnesiumhydroxids oder Aluminiumhydroxids verdünnt und zum einsatzbereiten oberflächenmodifizierten Füllstoff verarbeitet wird.

## Patentansprüche für folgenden Vertragsstaat : ES

**1.** Verfahren zur Herstellung von oberflächenmodifizierten Magnesiumhydroxid- oder Aluminiumhydroxidteilchen, dadurch gekennzeichnet, daß Magnesiumhydroxid- oder Aluminiumhydroxidteilchen mit einem flüssigen Ethylen-Propylen-Copolymer (EPM) und/oder einem flüssigen Ethylen-PropylenTerpolymer (EPDM) sowie zusätzlich mit einem trans-Polyoctenamer (TOR) und/oder einem thermoplastischen Elastomer und/oder einem Haftvermittler und/oder einem Netzwerkbildner als Oberflächenbehandlungsmittel, gleichzeitig oder getrennt, behandelt werden, wobei
- als flüssige EPM- oder EPDM-Polymere solche, die ein mittleres Molekulargewicht von kleiner als 20'000 aufweisen, in einer Menge von 0,1 bis 20 Teilen pro 100 Teile Magnesiumhydroxid oder Aluminiumhydroxid,
- als trans-Polyoctenamere solche, die einen trans-Gehalt zwischen 40 und 90% aufweisen, in einer Menge von 0,1 bis 50 Teilen pro 100 Teile Magnesiumhydroxid oder Aluminiumhydroxid,
- als thermoplastische Elastomere Ethylenvinylacetat (EVA) und seine Copolymere, Block-Copolymere aus weichen und harten Segmenten oder Legierungen (Polymer-Blends) in einer Menge von 0,1 bis 50 Teilen pro 100 Teile Magnesiumhydroxid oder Aluminiumhydroxid,
- als Haftvermittler ein Silan, ein Titanat, ein Aluminat, ein Zirkonat oder ein Zirkoaluminat oder gegebenenfalls Kombinationen der genannten Verbindungen in einer Menge zwischen 0,01 und 10 Teilen pro 100 Teile Magnesiumhydroxid oder Aluminiumhydroxid und
- als Netzwerkbildner Organopolysiloxane oder Organopolysiloxan-Copolymersysteme in einer Menge von 0,1 bis 20 Teilen pro 100 Teile Magnesiumhydroxid oder Aluminiumhydroxid

verwendet werden.

**2.** Verfahren nach Patentanspruch 1, dadurch gekennzeichnet, dass als thermoplastische Elastomere Ethylen-Vinylacetat-Copolymere, Styrolelastomere, thermoplastische PUR-Elastomere, Ether-Ester-Block-Copolymere, Polyether-Polyamid-Block-Copolymere, thermoplastische Silikonkautschuke oder thermoplastische Polyolefine verwendet werden.

**3.** Verfahren nach einem der Patentansprüche 1 oder 2, dadurch gekennzeichnet, daß die Oberflächenbehandlung durch intensives Mischen in einem geeigneten Mischer, vorzugsweise in einem Mischer, der hohe Scherkräfte ermöglicht, durchgeführt wird.

**4.** Verfahren nach einem der Patentansprüche 1 bis 3, dadurch gekennzeichnet, daß eine Vormischung der Oberflächenbehandlungsmittel zusammen mit dem Magnesiumhydroxid oder Aluminiumhydroxid dem Mischer zugeführt wird.

**5.** Verfahren nach einem der Patentansprüche 1 bis 3, dadurch gekennzeichnet, daß zunächst ein Additivkonzentrat hergestellt wird, indem nur eine Teilmenge des Magnesiumhydroxids oder Aluminiumhydroxids mit dem (den) Oberflächenbehandlungsmittel(n) in einem Mischer mit hohen Scherkräften vermischt wird, wonach dieses Additivkonzentrat in einem Mischaggregat mit gegebenenfalls geringeren Scherkräften mit der entsprechenden Menge zusätzlichen Magnesiumhydroxids oder Aluminiumhydroxids verdünnt und zum einsatzbereiten oberflächenmodifizierten Füllstoff verarbeitet wird.

6. Verwendung eines oberflächenmodifizierten Magnesiumhydroxids und/oder Aluminiumhydroxids hergestellt gemäß den Patentansprüchen 1 oder 2 als flammhemmender Füllstoff in thermoplastischen Polyolefinen.

7. Verwendung eines oberflächenmodifizierten Magnesiumhydroxids hergestellt gemäß den Patentansprüchen 1 oder 2 als flammhemmender Füllstoff in einer Menge von 50 - 70 Gew.% in Polypropylen.

8. Schwerbrennbares thermoplastisches Polyolefin, enthaltend ein oberflächenmodifiziertes Magnesiumhydroxid und/oder Aluminiumhydroxid hergestellt gemäß den Patentansprüchen 1 oder 2.

## Claims

**Claims for the following Contracting States : AT, BE, CH, DE, DK, FR, GB, GR, IT, LI, LU, NL, SE**

1. Surface-modified magnesium hydroxide particles or aluminum hydroxide particles, characterized in that for the purpose of surface treatment they are treated with a liquid ethylene propylene copolymer (EPM) and/or a liquid ethylene propylene terpolymer (EPDM) and in addition to that with a trans polyoctenamer (TOR) and/or a thermoplastic elastomer and/or a primer and/or a interpenetrating network builder using
   - as liquid EPM polymers or EPDM polymers those which have an average molecular weight of less than 20'000, in a quantity of 0.1 to 20 parts per 100 parts of magnesium hydroxide or aluminum hydroxide
   - as trans polyoctenamers those which have a trans content of between 40 and 90% in a quantity of 0.1 to 50 parts per 100 parts of magnesium hydroxide or aluminum hydroxide
   - as thermoplastic elastomers: ethylene vinyl acetate (EVA) and its copolymers, block copolymers comprised of soft and hard segments or alloys (polymer blends) in a quantity of 0.1 to 50 parts per 100 parts of magnesium hydroxide or aluminum hydroxide
   - as primer: a silane, a titanate, an aluminate, a zirconate or a zirco-aluminate or, optionally, combinations of the compounds mentioned in a quantity of between 0.01 and 10 parts per 100 parts of magnesium hydroxide or aluminum hydroxide and
   - as interpenetrating network builder: organopolysiloxanes or organopolysiloxane copolymer systems in a quantity of 0.1 to 20 parts per 100 parts of magnesium hydroxide or aluminum hydroxide.

2. Magnesium hydroxide particles or aluminum hydroxide particles according to claim 1, characterized in that as thermoplastic elastomers are used ethylene vinylacetate copolymers, styrene elastomers, thermoplastic PUR-elastomers, ether-ester block copolymers, polyether-polyamide block copolymers, thermoplastic silicone rubber or thermoplastic polyolefins.

3. The use of a surface-modified magnesium hydroxide and/or aluminum hydroxide according to claims 1 or 2 as flame-retardant filler in thermoplastic polyolefins.

4. The use of a surface-modified magnesium hydroxide according to claims 1 or 2 as flame-retardant filler in a quantity of 50-70 percent by weight in polypropylene.

5. A hardly combustible thermoplastic polyolefin containing a surface-modified magnesium hydroxide and/or aluminum hydroxide according to claims 1 or 2.

6. A process for the preparation of surface-modified magnesium hydroxide particles or aluminum hydroxide particles according to claims 1 or 2, characterized in that magnesium hydroxide particles or aluminum hydroxide particles are treated - simultaneously or separately - with a liquid ethylene propylene copolymer (EPM) and/or a liquid ethylene propylene terpolymer (EPDM) and in addition to that with a trans polyoctenamer (TOR) and/or a thermoplastic elastomer and/or a primer and/or a interpenetrating network builder as surface treatment agent, using
   - as liquid EPM polymers or EPDM polymers those which have an average molecular weight of less than 20'000, in a quantity of 0.1 to 20 parts per 100 parts of magnesium hydroxide or aluminum hydroxide
- as trans polyoctenamers those which have a trans content of between 40 and 90% in a quantity of 0.1 to 50 parts per 100 parts of magnesium hydroxide or aluminum hydroxide
- as thermoplastic elastomers: ethylene vinyl acetate (EVA) and its copolymers, block copolymers comprised of soft and hard segments or alloys (polymer blends) in a quantity of 0.1 to 50 parts per 100 parts of magnesium hydroxide or aluminum hydroxide
- as primer: a silane, a titanate, an aluminate, a zirconate or a zirco-aluminate or, optionally, combinations of the compounds mentioned in a quantity of between 0.01 and 10 parts per 100 parts of magnesium hydroxide or aluminum hydroxide and
- as interpenetrating network builder: organopolysiloxanes or organopolysiloxane-copolymer systems in a quantity of 0.1 to 20 parts per 100 parts of magnesium hydroxide or aluminum hydroxide.

7. A process according to claim 6, characterized in that the surface treatment is carried out by intensive mixing in a suitable mixer, preferably a mixer which makes possible high shearing forces.

8. A process according to one of the claims 6 or 7, characterized in that a premixture of the surface treatment agents are added to the mixer together with the magnesium hydroxide or aluminum hydroxide.

9. A process according to one of the claims 6 or 7, characterized in that first a concentrated additive is prepared by mixing only a partial quantity of the magnesium hydroxide or aluminum hydroxide with the surface treatment agent(s) in a mixer with high shearing forces whereupon this concentrated additive is diluted in a mixing unit with, optionally, lesser shearing forces with the corresponding quantity of additional magnesium hydroxide or aluminum hydroxide and is processed into the surface-modified filler ready for use.

**Claims for the following Contracting State : ES**

1. A process for the preparation of surface-modified magnesium hydroxide particles or aluminum hydroxide particles, characterized in that magnesium hydroxide particles or aluminum hydroxide particles are treated, simultaneously or separately, with a liquid ethylene propylene copolymer (EPM) and/or a liquid ethylene propylene terpolymer (EPDM) and additonally with a trans polyoctenamer (TOR) and/or a thermoplastic elastomer and/or a primer and/or a inter-penetrating network builder as a surface treatment agent, using
   - as liquid EPM polymers or EPDM polymers those which have an average molecular weight of less than 20'000, in a quantity of 0.1 to 20 parts per 100 parts of magnesium hydroxide or aluminum hydroxide,
   - as trans polyoctenamers those which have a trans content of between 40 and 90% in a quantity of 0.1 to 50 parts per 100 parts of magnesium hydroxide or aluminum hydroxide,
   - as thermoplastic elastomers: ethylene vinyl acetate (EVA) and its copolymers, block copolymers comprised of soft and hard segments or alloys (polymer blends) in a quantity of 0.1 to 50 parts per 100 parts of magnesium hydroxide or aluminum hydroxide,
   - as primer: a silane, a titanate, an aluminate, a zirconate or a zirco-aluminate or, optionally, combinations of the compounds mentioned in a quantity of between 0.01 and 10 parts per 100 parts of magnesium hydroxide or aluminum hydroxide and
   - as interpenetrating network builder: organopolysiloxanes or organopolysiloxane-copolymer systems in a quantity of 0.1 to 20 parts per 100 parts of magnesium hydroxide or aluminum hydroxide.

2. The process according to claim 1, characterized in that as thermoplastic elastomers ethylene vinyl acetate copolymers, styrene eleastomers, thermoplastic PUR-elastomers, etherester block copolymers, polyether-polyamide block copolymers, thermoplastic silicone rubbers or thermoplastic polyolefins are used.

3. The process according to one of the patent claims 1 or 2, characterized in that the surface treatment is carried out by intensive mixing in a suitable mixer, preferably in a mixer allowing high shearing forces.

4. The process according to one of the claims 1 to 3, characterized in that a premixture of the surface treatment agents is added to the mixer together with the magnesium hydroxide or aluminum hydroxide.

5. The process according to one of the claims 1 to 3, characterized in that, at first, a concentrated additive is produced by mixing only a partial amount of the magnesium hydroxide or aluminum hydroxide with the surface treatment agent(s) in a mixer having high shearing forces, whereupon this concentrated additive is diluted in a mixing unit opionally having lesser shearing forces with the corresponding quantity of additional magnesium hydroxide or aluminum hydroxide and is processed into the surface-modified filler ready for use.

6. The use of a surface-modified magnesium hydroxide and/or aluminum hydroxide produced according to the claims 1 or 2 as flame-retardant filler in thermoplastic polyolefins.

7. The use of a surface-modified magnesium hydroxide produced according to the claims 1 or 2, as flame-retardant filler in a quantity of 50 - 70 percent by weight in polypropylene.

8. A hardly combustible thermoplastic polyolefin containing a surface-modified magnesium hydroxide and/or aluminum hydroxide produced according to the claims 1 or 2.

## Revendications

### Revendications pour les Etats contractants suivants : AT, BE, CH, DE, DK, FR, GB, GR, IT, LI, LU, NL, SE

1. Particules d'hydroxyde de magnésium ou d'hydroxyde d'aluminium à surface modifiée, caractérisées en ce que, pour le traitement de surface, elles sont traitées avec un copolymère éthylène-propylène liquide (EPM) et/ou un terpolymère éthylène-propylène liquide (EPDM) ainsi que, de façon supplémentaire, avec un polyocténamère-trans (TOR) ou un élastomère thermoplastique et/ou un agent de pontage ou agent conférant l'adhésivité et/ou un agent de réticulation, ce en quoi,
   - en tant que polymères EPM ou EPDM liquides, on utilise les polymères qui ont un poids moléculaire moyen inférieur à 20 000 dans une quantité de 0,1 jusqu'à 20 parties pour 100 parties d'hydroxyde de magnésium ou d'hydroxyde d'aluminium,
   - en tant que polyocténamères-trans, on utilise ceux qui présentent une teneur trans entre 40 et 90 % dans une quantité de 0,1 à 50 parties pour 100 parties d'hydroxyde de magnésium ou d'hydroxyde d'aluminium,
   - en tant qu'élastomères thermoplastiques, on utilise de l'éthylènevinylacétate (EVA) et ses copolymères, les copolymères en masse à partir de segments mous et durs ou d'alliages (mélanges polymères) dans une quantité de 0,1 jusqu'à 50 parties pour 100 parties d'hydroxyde de magnésium ou d'hydroxyde d'aluminium,
   - en tant qu'agent conférant l'adhésivité ou agent de pontage, on utilise un silane, un titanate, un aluminate, un zirconate ou un zircoaluminate ou, le cas échéant, des combinaisons des composés cités dans une quantité entre 0,01 et 10 parties pour 100 parties d'hydroxyde de magnésium ou d'hydroxyde d'aluminium, et
   - en tant qu'agent de formation de réticulation, on utilise des organopolysiloxanes ou des systèmes organopolysiloxanes-copolymères dans une quantité de 0,1 jusqu'à 20 parties pour 100 parties d'hydroxyde de magnésium ou d'hydroxyde d'aluminium.

2. Particules d'hydroxyde de magnésium ou d'hydroxyde d'aluminium selon la revendication 1, caractérisées en ce qu'en tant qu'élastomères thermoplastiques, on utilise des copolymères-vinylacétate-éthylène , des styrols élastomères, des élastomères PUR thermoplastiques, des copolymères en masse-éther-ester, des copolymères en masse-polyamide-polyéther, des caoutchoucs au silicone thermoplastiques ou des polyoléfines thermoplastiques.

3. Utilisation d'un hydroxyde de magnésium et/ou d'un hydroxyde d'aluminium à surface modifiée selon les revendications 1 ou 2 en tant que matière de charge ignifuge dans des polyoléfines thermoplastiques.

4. Utilisation d'un hydroxyde de magnésium à surface modifiée selon les revendications 1 ou 2, en tant que matière de charge ignifuge dans une quantité de 50-70% en poids de polypropylène.

5. Polyoléfine thermoplastique peu combustible, contenant un hydroxyde de magnésium et/ou un hydroxyde d'aluminium à surface modifiée selon les revendications 1 ou 2.

6. Procédé pour la préparation de particules d'hydroxyde de magnésium ou d'hydroxyde d'aluminium à surface modifiée selon les revendications 1 ou 2, caractérisé en ce que les particules d'hydroxyde de magnésium ou d'hydroxyde d'aluminium avec un copolymère-propylène-éthylène liquide (EPM) et/ou un terpolymère-propylène-éthylène liquide (EPDM) ainsi qu'à titre supplémentaire un polyocténamère-trans (TOR) et/ou un élastomère thermoplastique et/ou un agent conférant l'adhésivité ou agent de pontage et/ou un agent formant réticulation en tant que produit de traitement de surface, de façon simultanée ou séparée, ce en quoi on utilise

- en tant que polymères EPM ou EPDM liquides, les polymères qui ont un poids moléculaire moyen inférieur à 20 000 dans une quantité de 0,1 jusqu'à 20 parties pour 100 parties d'hydroxyde de magnésium ou d'hydroxyde d'aluminium,
- en tant que polyocténamères-trans , on utilise ceux qui présentent une teneur trans entre 40 et 90 % dans une quantité de 0,1 jusqu'à 50 parties pour 100 parties d'hydroxyde de magnésium ou d'hydroxyde d'aluminium,
- en tant qu'élastomères thermoplastiques, on utilise l'éthylènevinylacetate (EVA) et ses copolymères, des copolymères en masse à partir de segments mous et durs ou d'alliages (mélanges polymères) dans une quantité de 0,1 jusqu'à 5 parties pour 100 parties d'hydroxyde de magnésium ou d'hydroxyde d'aluminium,
- en tant qu'agent conférant l'adhésivité ou agent de pontage, on utilise un silane, un titanate, un aluminate, un zirconate ou un zircoaluminate ou, éventuellement, des combinaisons des composés cités dans une quantité entre 0,01 et 10 parties pour 100 parties d'hydroxyde de magnésium ou d'hydroxyde d'aluminium et
- en tant qu'agent formant réticulation, on utilise des organopolysiloxanes ou des systèmes copolymères-organopolysiloxanes dans une quantité de 0,1 jusqu'à 20 parties pour 100 parties d'hydroxyde de magnésium ou d'hydroxyde d'aluminium.

7. Procédé selon la revendication 6, caractérisé en ce que le traitement de surface est effectué par mélange intensif dans un mélangeur approprié, de préférence dans un mélangeur qui permet d'atteindre des forces de cisaillement élevés.

8. Procédé selon l'une des revendications 6 ou 7, caractérisé en ce que l'on amène un pré-mélange du produit de traitement de surface conjointement avec l'hydroxyde de magnésium ou l'hydroxyde d'aluminium au mélangeur.

9. Procédé selon l'une des revendications 6 ou 7, caractérisé en ce que l'on produit d'abord un concentré d'additif, où l'on ne mélange qu'une portion de l'hydroxyde de magnésium ou de l'hydroxyde d'aluminium avec le ou les produits de traitement de surface dans un mélangeur avec des forces de cisaillement élevées, après quoi, ce concentré d'additif est dilué dans un appareil mélangeur avec éventuellement des forces de cisaillement moindres avec la quantité correspondante d'hydroxyde de magnésium ou d'hydroxyde d'aluminium supplémentaire et l'on procède au traitement de la matière de charge à surface modifiée prête à l'utilisation.

**Revendications pour l'Etat contractant suivant : ES**

1. Procédé pour la préparation de particules d'hydroxyde de magnésium ou d'hydroxyde d'aluminium à surface modifiée, caractérisé en ce que les particules d'hydroxyde de magnésium ou d'hydroxyde d'aluminium sont traitées avec un copolymère-propylène-éthylène liquide (EPM) et/ou un ter-polymère-propylène-éthylène liquide (EPDM) ainsi qu'à titre supplémentaire un polyocténamère-trans (TOR) et/ou un élastomère thermoplastique et/ou un agent conférant l'adhésivité ou agent de pontage et/ou un agent formant réticulation en tant que moyen de traitement de surface, de façon simultanée ou séparée, ce en quoi on utilise

- en tant que polymères EPM ou EPDM liquides, les polymères qui ont un poids moléculaire moyen inférieur à 20 000 dans une quantité de 0,1 jusqu'à 20 parties pour 100 parties d'hydroxyde de magnésium ou d'hydroxyde d'aluminium,
- en tant que polyocténamères-trans, on utilise ceux qui présentent une teneur trans entre 40 et 90 % dans une quantité de 0,1 jusqu'à 50 parties pour 100 parties d'hydroxyde de magnésium ou d'hydroxyde d'aluminium,
- en tant qu'élastomères thermoplastiques, on utilise l'éthylènevinylacetate (EVA) et ses copolymères, des copolymères en masse à partir de segments mous et durs ou d'alliages (mélanges polymères) dans une quantité de 0,1 jusqu'à 5 parties pour 100 parties d'hydroxyde de magnésium ou d'hydroxyde d'aluminium,

- en tant qu'agent conférant l'adhésivité ou agent de pontage, on utilise un silane, un titanate, un aluminate, un zirconate ou un zircoaluminate ou, éventuellement, des combinaisons des composés cités dans une quantité entre 0,01 et 10 parties pour 100 parties d'hydroxyde de magnésium ou d'hydroxyde d'aluminium et

- en tant qu'agent formant réticulation, on utilise des organopolysiloxanes ou des systèmes copolymères-organopolysiloxanes dans une quantité de 0,1 jusqu'à 20 parties pour 100 parties d'hydroxyde de magnésium ou d'hydroxyde d'aluminium.

2. Procédé selon la revendication 1, caractérisé en ce qu'en tant qu'élastomère thermoplastique on utilise des copolymères-vinylacétate-éthylène, des styrols élastomères, des élastomères PUR-thermoplastiques, des copolymères en masse-éther-ester, des copolymères en masse-polyamide-polyéther, des caoutchoucs au silicone thermoplastiques ou des polyoléfines thermoplastiques.

3. Procédé selon l'une des revendications 1 ou 2, caractérisé en ce que le traitement de surface est effectué par mélange intensif dans un mélangeur approprié, de préférence dans un mélangeur qui permet d'atteindre des forces de cisaillement élevées.

4. Procédé selon l'une des revendications 1 à 3, caractérisé en ce que l'on amène un pré-mélange du produit de traitement de surface conjointement avec l'hydroxyde de magnésium ou l'hydroxyde d'aluminium au mélangeur.

5. Procédé selon l'une des revendications 1 à 3, caractérisé en ce que l'on produit d'abord un concentré d'additif, où l'on ne mélange qu'une portion de l'hydroxyde de magnésium ou de l'hydroxyde d'aluminium avec le ou les produits de traitement de surface dans un mélangeur avec des forces de cisaillement élevées, après quoi, ce concentré d'additif est dilué dans un appareil mélangeur avec éventuellement des forces de cisaillement moindres avec la quantité correspondante d'hydroxyde de magnésium ou d'hydroxyde d'aluminium supplémentaire et l'on procède au traitement de la matière de charge à surface modifiée prête à l'utilisation.

6. Utilisation d'un hydroxyde de magnésium et/ou d'un hydroxyde d'aluminium à surface modifiée selon les revendications 1 ou 2, en tant que matière de charge ignifuge dans des polyoléfines thermoplastiques.

7. Utilisation d'un hydroxyde de magnésium à surfaces modifiées selon les revendications 1 ou 2, en tant que matière de charge ignifuge dans une quantité de 50-70% en poids de polypropylène.

8. Polyoléfine thermoplastique peu combustible contenant un hydroxyde de magnésium et/ou un hydroxyde d'aluminium à surface modifiée selon les revendications 1 ou 2.